# EUROPÄISCHE PATENTSCHRIFT

(11) **EP 1 090 062 B1**
(45) Veröffentlichungstag und Bekanntmachung des Hinweises auf die Patenterteilung: **12.03.2003**
(21) Anmeldenummer: 99914549.3
(22) Anmeldetag: 26.03.1999
(51) Int. Cl.: C08J 3/12, B29B 9/06, B29B 9/12

(54) **VAKUOLENFREIE POLYMERGRANULATE**
VACUOLE-FREE POLYMER GRANULATES
GRANULATS POLYMERES EXEMPTS DE VACUOLES

(30) Priorität: 08.04.1998 DE 19815717
(43) Veröffentlichungstag der Anmeldung: 11.04.2001
(73) Patentinhaber: Bayer Aktiengesellschaft, 51368 Leverkusen (DE)
(72) Erfinder: ELSNER, Thomas, D-40953 Düsseldorf (DE); HEUSER, Jürgen, D-47803 Krefeld (DE); KORDS, Christian, D-47829 Krefeld (DE)
(86) Internationale Anmeldenummer: EP9902088
(87) Internationale Veröffentlichungsnummer: WO99052967

(56) Entgegenhaltungen:
- EP-A- 0 178 150
- WO-A-96/26241

## Beschreibung

Die vorliegende Anmeldung betrifft ein Verfahren zur Herstellung von Polymergranulaten mit einem Vakuolengehalt von <1 Vol.-%, wobei das Polymere nach dem Extrudieren und vor dem Schneiden mit ≤ 50 °C/sec bis kurz oberhalb der Glastemperatur abgekühlt wird.

Bei der Herstellung von Polymeren ist das Extrudieren des Polymeren in eine bestimmte, meistens zylinderähnliche Form einer der letzten Verfahrensschritte. Nach dem Extrudieren wird das Produkt dann noch gekühlt, geschnitten und gegebenenfalls noch einmal gekühlt, bevor es als verkaufsfertiges Produkt vorliegt.

Eine der Anforderungen, die an dieses Endprodukt gestellt werden, ist, dass es keine Vakuolen, d.h. kleine Gaseinschlüsse, aufweist, weil sich diese nachteilig bei der Weiterverarbeitung auswirken. Transparente Polymergranulate mit Vakuolen sind ferner optisch weniger ansprechend.

WO 96/26241 lehrt ein Verfahren zur Herstellung von Polymergranulaten, bei dem der Polymerstrang nach dem Extrudieren in einem Wasserbad mit einer Temperatur zwischen 44 und 95°C abgekühlt und dann geschnitten wird. Es werden Granulate erhalten, die weniger als 10 Vol.-% Vakuolen enthalten. Dieser Wert ist jedoch noch nicht befiriedigend.

Es wurde nun ein Verfahren gefunden, mit dem man Granulate mit einem Vakuolengehalt < 1 Vol.-%, bevorzugt sogar < 0,1 Vol.-% erhalten kann.

Gegenstand der Erfindung ist ein Verfahren zur Herstellung von Polymergranulaten mit einem Vakuolengehalt von <1 Vol.-%, bei dem das Polymere nach dem Extrudieren mit einer Kühlrate < 50°C/sec, bevorzugt < 20°C/sec, auf eine Temperatur abgekühlt wird, die 1 bis 20°C, bevorzugt 5-10°C oberhalb der Glastemperatur T_{g} des Polymeren liegt, und anschließend geschnitten wird. In einer bevorzugten Ausführungsform der Erfindung wird das Granulat während des Schneidens auf eine Temperatur von ≤ 100°C, bevorzugt ≤ 90°C gekühlt. Dies kann beispielsweise durch Besprühen mit Wasser erfolgen, das eine Temperatur von ≤ 30°C aufweist.

Bevorzugt beträgt die Temperaturdifferenz zwischen Polymer und Kühlmedium weniger als 370°C. In einer bevorzugten Ausführungsform wird das Polymere mit Wasser gekühlt, das eine Temperatur von 40 bis 80°C, vorzugsweise 50 bis 60°C, aufweist. Ganz besonders bevorzugt wird das Polymere nach dem Extrudieren durch ein Wasserbad geleitet, das eine Temperatur von 40 bis 80°C, vorzugsweise 50 bis 60°C aufweist. Die Verweilzeit des Polymeren in dem Wasserbad sollte vorzugsweise 3 bis 10 Sekunden betragen. In einer alternativen Ausführungsform wird der Polymerstrang nach dem Extrudieren mit Wasser besprüht, wobei das Wasser eine Temperatur von 40 bis 80°C, vorzugsweise 50 bis 60°C aufweisen sollte.

Das erfindungsgemäße Verfahren eignet sich zur Herstellung von vakuolenfreien Polymergranulaten jeglicher Art. Insbesondere eignet es sich jedoch zur Herstellung von Granulaten thermoplastischer Polymere. Thermoplastische Polymere im Sinne der Erfindung sind alle Kunststoffe, die unter dem Einfluss von Druck und Temperatur fließfähig werden. Beispielhaft sei hier Polystyrol, Polyphenylen, Polyurethan, Polyamid, Polyester, Polyacrylat, Polymethacrylat, SAN und ihre Copolymeren genannt. Ganz besonders eignet sich das Verfahren zur Herstellung von vakuolenfreiem Polycarbonatgranulat.

Polycarbonate im Sinne der vorliegenden Erfindung sind sowohl Homopolycarbonate als auch Copolycarbonate. Die Polycarbonate können in bekannter Weise linear oder verzweigt sein. Bis zu 80 Mol-%, vorzugsweise von 20 Mol-%, bis zu 50 Mol-% der Carbonat-Gruppen in den geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen unter dem Oberbegriff der thermoplastischen, aromatischen Polycarbonate subsumiert werden.

Einzelheiten der Herstellung von Polycarbonaten sind in Hunderten von Patentschriften seit etwa 40 Jahren niedergelegt. Beispielhaft sei hier nur auf "Schnell Chemistry and Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980), auf D. Freitag, U. Grigo, P.R. Müller, N. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl-Hanser Verlag München, Wien 1992, Seiten 117-299 verwiesen.

Bevorzugte thermoplastische Polycarbonate haben mittlere Molekulargewichte Mᵥ (ermittelt durch Messung der relativen Viskosität bei 25°C in CH₂Cl₂ und einer Konzentration von 0,5 g pro 100 ml CH₂Cl₂) von 12 000 bis 400 000, vorzugsweise von 18 000 bis 80 000 und insbesondere von 22 000 bis 60 000.

### Beispiel

### Beispiel 1

Polycarbonat wird nach dessen Herstellung in Stränge mit einem zylindrischellipsoiden Querschnitt und einem Durchmesser von ca. 3 mm extrudiert. Die Temperatur des Polycarbonats beträgt nach der Extrusion 350°C. Die Stränge werden in einem Wasserbad mit einer konstanten Wassertemperatur von 60°C gekühlt. Die Verweilzeit der Stränge in dem Wasserbad beträgt 4 Sekunden. Die Stränge verlassen das Wasserbad mit einer Temperatur von 150°C, werden geschnitten/granuliert und während des Schneidevorgangs mit Wasser (T=25°C) besprüht und so auf 95°C abgekühlt.

Bei dem so erhaltenen Polycarbonat wird der Vakuolenanteil durch Auszählen der Granulatkörner mit Vakuolen in einer Probe von 1 kg Granulat bestimmt. Es wurden keine Vakuolen im Granulat gefunden.

### Beispiel 2

Polycarbonat wird nach dessen Herstellung in Stränge mit einem zylindrischellipsoiden Querschnitt und einem Durchmesser von ca. 3 mm extrudiert. Die Temperatur des Polycarbonat beträgt nach der Extrusion 350°C. Die Stränge werden in einem Wasserbad mit einer konstanten Wassertemperatur von 60°C gekühlt. Die Verweilzeit der Stränge in dem Wasserbad beträgt 4 Sekunden. Die Stränge verlassen das Wasserbad mit einer Temperatur von 150°C und werden ohne weitere Kühlung geschnitten.

Das erhaltene Granulat enthält 0,8 Vol.-% Vakuolen.

### Beispiel 3 (Vergleich)

Polycarbonat wird nach dessen Herstellung in Stränge mit einem zylindrischellipsoiden Querschnitt und einem Durchmesser von ca. 3 mm extrudiert. Die Temperatur des Polycarbonat beträgt nach der Extrusion 400°C. Die Stränge werden in einem Wasserbad mit einer konstanten Wassertemperatur von 20°C gekühlt. Die Verweilzeit der Stränge in dem Wasserbad beträgt 4 Sekunden. Die Stränge verlassen das Wasserbad mit einer Temperatur von 95°C und werden ohne weitere Kühlung geschnitten.

Das so erhaltene Polycarbonat-Granulat enthält 5 Vol.-% Vakuolen.

## Patentansprüche

1. Verfahren zur Herstellung von Polymergranulaten mit einem Vakuolengehalt <1 Vol-%, bei dem das Polymere nach dem Extrudieren mit einer Kühlrate < 50°C/sec auf eine Temperatur abgekühlt wird, die 1 bis 20°C oberhalb der Glastemperatur T_{g} des Polymeren liegt, und anschließend geschnitten wird.

2. Verfahren gemäß Anspruch 1, bei dem das Polymere während des Schneidens auf eine Temperatur von ≤ 100°C gekühlt wird.

3. Verfahren gemäß Anspruch 1 oder 2, bei dem das Polymer Polycarbonat ist.

## Claims

1. Process for-producing polymer granules having a vacuole content of < 1 vol.% wherein, after having been extruded, the polymer is cooled at a cooling rate of < 50°C/sec to a temperature which is 1°C to 20°C above the glass transition temperature T_{g} of the polymer, and then cut.

2. Process according to claim 1, wherein the polymer is cooled to a temperature of ≤100°C during the cutting process.

3. Process according to claim 1 or 2, wherein the polymer is polycarbonate.

## Revendications

1. Procédé de fabrication de granulés de polymère avec une teneur en vacuoles < 1% en volume, dans lequel le polymère est refroidi, après l'extrusion à une vitesse < 50°C/s à une température qui se situe de 1 à 20°C au-dessus de la température de transition vitreuse T_{g} du polymère, puis est découpé.

2. Procédé selon la revendication 1, dans lequel le polymère est refroidi, pendant la découpe, à une température ≤ 100°C.

3. Procédé selon la revendication 1 ou 2, dans lequel le polymère est du polycarbonate.
